# EUROPEAN PATENT APPLICATION

(11) **EP 4 118 972 A1**
(43) Date of publication of application: **18.01.2023**
(21) Application number: 21186052.3
(22) Date of filing: 16.07.2021
(51) Int. Cl.: A23B 7/148, A23B 7/152, A23N 15/00, C11B 1/04

(54) **A PROCESS AND AN EQUIPMENT FOR INERTING AN OLIVE MILLING OPERATION**

(71) Applicant: L'Air Liquide, société anonyme pour l'Étude et l'Exploitation des procédés Georges Claude, 75007 Paris (FR); Air Liquide España, S.A., 28046 Madrid (ES); Air Liquide Italia S.p.A., 20148 Milano (IT)
(72) Inventor: SPIZZICA, Andrea, 20158 MILANO (IT); JIMENEZ, Joseluis, 28046 MADRID (ES); GONZALEZ GOMEZ, Miguel, 28046 MADRID (ES)
(74) Representative: Air Liquide

(57) **Abstract**

A process for producing olive oil, comprising an operation of pressing the olives in a grinder (1), with the aim of forming an olive paste (9), operation of pressing followed by an operation of malaxation of the olive paste, wherein the olives are charged in a hopper (2), and allowed to be transferred from the hopper to the grinder, passing or not through a screw able to transfer the olives from the hopper to the grinder, characterized in that a first gas injection (5) is implemented at the level of the neck of the hopper providing the olives to the grinder, the gas or gas mixture used for the first injection being neutral, made for example of nitrogen, or argon, or CO₂, or a mixture of those gases, allowing to limit the residual oxygen downstream the hopper and particularly in the grinder in the 0 to 5% range.

## Description

The present invention refers to a method for regulating the adsorption & absorption of gaseous oxygen, or other gases, by fluids or pastes obtained by means of grinding or crushing raw materials, in particular vegetable matter. The present invention is more particularly interested in the pressing of olives as an example of vegetable matter and to oxygen as the element whose content within the fluid obtained is to be regulated.

As it is known, pressing the olives consists in breaking up the olives using mechanical means, mainly by means of crushing or impact, with the aim of forming a paste, commonly known as "olive paste", paste which will undergo a subsequent kneading (malaxation) process, whose objective is to break up the emulsions formed during pressing and facilitate the subsequent separation of the oil from the remaining components of the paste.

The olive paste, owing to the way in which it is obtained, contains dissolved oxygen and, incorporated therein, small gas bubbles with a composition similar to the atmosphere present in the press during pressing.

As it is known, oxygen, like other substances in the gaseous state, dissolves in a fluid, i.e. in the olive paste in the case here considered, in amounts regulated by physical laws, depending on its partial pressure, on the temperature of the fluid and on other characteristics related to the type of fluid and the system as a whole, such as stirring, the contact time, etc. The oxygen, moreover, in the case described here is also contained in the atmosphere present in the press and consequently in the small bubbles incorporated in the paste-like fluid. These small bubbles release oxygen to the paste also after pressing, in particular during kneading.

It is to be considered that usually the presses operate at atmospheric pressure and therefore the partial pressure of the oxygen in the atmosphere contained by them coincides with its mole fraction.

The kneading process has a duration varying usually from twenty to fifty minutes and may be loosely described as a slow remixing of the paste inside a special container called a kneader. It is known to people skilled in the art, that during the kneading operations, the oxygen dissolved in the paste, if present in concentrations such as those present following turbulent contact of the latter with the air (as occurs during pressing), produces oxidation effects which impair the quality of the oil and moreover result in the need for frequent cleaning and sanitization of the kneaders.

These are the reasons why it is important to reduce and control the oxygen in contact with and dissolved in the olive paste.

The literature has reported known techniques aimed at keeping the oxygen at optimum concentrations within the gaseous phase inside the kneader, this phase being in contact with the paste during kneading. These techniques, although rapidly forming and maintaining for the kneading time an atmosphere with an optimum composition in contact with the separation surface of the paste, suffer from a limitation consisting in the fact that the small gas bubbles incorporated in the paste, during pressing, rise very slowly to the surface of the paste where they break and form again, possibly, with an optimum composition, such as that existing in the protective atmosphere formed inside the kneader.

The slowness of the breaking-up process and any formation of new small bubbles with an optimum composition is almost inevitable and is due to the necessary slowness of remixing inside the kneader.

With this technique the time required to reduce the oxygen contained in the paste to optimum values is decidedly greater than that needed for oxidation and deterioration of the components of the oil and therefore, by means of the known method, the deterioration of these components is only partly avoided.

Virgin Olive Oil (VOO) is an example of the final product from olive paste which requires careful quality control. Benefits of VOO consumption are notably related to well established protection against cardiovascular and other diseases, mainly due to the presence of phenolic compounds.

Various studies of Spanish research centers (including the Center of the Spanish National Research Council located in Seville) are focusing on the impact of the Volatile Organic Compounds and the phenolic profile of VOO.

These quality properties have been studied for more than twenty years. On the other hand, in the last twenty years, super intensive olive plantations have been hugely increasing compared to traditional cultivation, due to the large VOO demand.

The synthesis of these Volatile Organic Compounds and phenolic compounds is directly related to the two steps of olive oil extraction evoked above: milling (crushing the olive) and mixing (churning and mixing the milled olives in order to separate the oily and aqueous phases).

This last step has been thoroughly studied in order to understand the way VOO acquires its organoleptic and nutritional properties. However, considerably less attention has been given to the milling step, especially in terms of the organoleptic properties of the resulting oils.

According to those studies, in the milling steps two key processes should be point of attention: the production and loss of Volatile Organic Compounds (responsible for organoleptic quality) and the production of phenolic compounds (responsible for nutritional quality and natural antioxidants).

According to those studies, the two processes could be optimized reducing the oxygen in the atmosphere and finding its minimum level that, while affecting minimally the volatile synthesis, increase the level of phenolic in the oils.

As mentioned above, most of the existing industrial solutions are focused on the mixing process. In the mixing, the olive paste is currently heated to around 27 °C during this process. Oil yield is proportional to the temperature and mixing time. However, the use of higher temperatures and longer mixing times increases oxidation of the oil and therefore decreases shelf life, so a compromise must be found. Also, the usage of higher temperatures does not allow for the labelling of the oil as "cold extracted", a term used widely as a marketing tactic, especially in the European Union.

One of the objects of the present invention is therefore to propose a method and an equipment offering a better control of the oxygen content of the paste during the milling step.

In the rest of the description and claims below, the terms "milling", "grinding" or "pressing" will be used equally, interchangeably, as referring to the same operation of breaking up the olives using mechanical means with the aim of forming the "olive paste".

It is known from the document WO2007/048789, injecting a gas or a mixture of gases such as N₂, Ar, or CO₂, in the olive milling machine, at the level of the screw transporting the olives from a hopper to the grinder.

As it will be explained in more details here-below, according to the present invention, it is proposed to implement at least one injection in the milling machine, and even more preferably a double step inerting system in the milling machine :
- a first injection at the level of the neck of a hopper providing the olives to the grinder i.e at the transition between the hopper and the rest of the milling machine.

It should be noted that if certain installations comprise a screw between the hopper and the grinder, for other installations, the olives go directly from the hopper to the grinding tool.
- and advantageously a second injection, located in a transportation pipe connecting the exit of the mill to the next process step of the plant i.e to the malaxation operation.

According to advantageous embodiments of the invention, the invention will be able to adopt one or more of the following technical features :
- the gas or gas mixture used for the first injection is neutral, for example made of nitrogen, or argon, or CO₂, or a mixture of those gases, with the objective to limit, through this inerting barrier, the inlet of air and keep this way the residual oxygen downstream the hopper and particularly in the grinder in the 0 to 5% range.
- the gas or gas mixture used for the optional and advantageous second injection is neutral, for example made of nitrogen, or argon, or CO₂, or a mixture of those gases, but advantageously contains a certain amount of oxygen, typically from 0% up to 10% O₂.

It is the merit of the present invention to have understood that a certain amount of oxygen is highly beneficial at this stage since after the milling/crushing, the olive paste goes to the mixing step (malaxation) and will take benefit from the presence of some oxygen for the enzymatic reactions that will take place there.
- the first and second injections can implement two different neutral gases or mixtures of neutral gases.
- depending on the temperature and the quantity of the gas injected at the first injection location, it is possible to maintain the temperature of the crushed olives in the grinder at ambient temperature or at least to limit their increase of temperature through the fact that the gas or gas mixture used for the first injection is injected at ambient temperature or even at a temperature lower than the ambient one.

In case the temperature of the gas injected in the neck of the hopper is lower than ambient one, the value will be set according to the material of the mill and its resilience. And so depending on the material in which the mill is made, the cold gas can be injected down to -10 °C and no lower for safety reasons (risk of rupture), but in other cases the cold gas can be injected down near to its boiling point at ambient pressure (for example for nitrogen near to - 196°C).
- the gas injector implemented for the second injection in said transportation pipe has advantageously the form of a circular ring provided with gas through-flow holes, allowing the introduction of gases or gaseous mixtures into the pipe inside which flows the olive paste.

An example of such a structure of circular injector is described in the Utility Model ITMI20070127.
- regarding the first injection, a simple injector can be used in the form of a simple pipe ending up inside the hopper, pipe being in its upstream part connected to a relevant source of gas.
- according to another mode of implementation, the first injection is made at low speed in laminar flow. One can use for this purpose an injector known in the industry of plastics such as the injector described in the document EP-1 318 903.

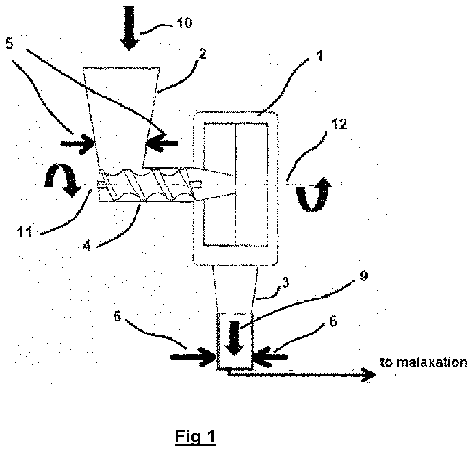

For a better understanding of the present invention the following drawing is attached purely by way of a non-limiting example, in which Figure 1 shows a schematic view of an equipement according to the invention.

One can recognize in Figure 1 the following elements of installation :
- 1 : grinder
- 2 : hopper
- 3 : exit of the mill
- 4: screw
- 5 : injection(s) at the neck of the hopper
- 6 : injection in the pipe leaving the grinder and leading to the malaxation step
- 9 : the flow of paste leaving the mill
- 10 : the flow of olives entering the press
- 11 : axis of the screw
- 12 : axis of the rotor of the grinder

The present invention deals therefore with a process for producing olive oil, comprising an operation of pressing the olives in a grinder, with the aim of forming an olive paste, operation of pressing followed by an operation of malaxation of the olive paste, wherein the olives are charged in a hopper, and allowed to be transferred from the hopper to the grinder, passing or not through a screw able to transfer the olives from the hopper to the grinder, characterized in that a first gas injection is implemented at the level of the neck of the hopper providing the olives to the grinder, the gas or gas mixture used for the first injection being neutral, made for example of nitrogen, or argon, or CO₂, or a mixture of those gases, allowing to limit the residual oxygen downstream the hopper and particularly in the grinder in the 0 to 5% range.

## Claims

1. A process for producing olive oil, comprising an operation of pressing the olives in a grinder (1), with the aim of forming an olive paste (9), operation of pressing followed by an operation of malaxation of the olive paste, wherein the olives are charged in a hopper (2), and allowed to be transferred from the hopper to the grinder, passing or not through a screw able to transfer the olives from the hopper to the grinder, **characterized in that** a first gas injection (5) is performed at the level of the neck of the hopper providing the olives to the grinder;
wherein the gas or gas mixture used for the first injection is neutral, made for example of nitrogen, or argon, or CO₂, or a mixture of those gases, allowing to limit the residual oxygen downstream the hopper and particularly in the grinder in the 0 to 5% range.

2. The process of claim 1, **characterized in that** the gas or gas mixture used for the first injection is injected at ambient temperature or at a temperature lower than the ambient one.

3. The process of claim 1 or 2, **characterized in that** a second gas injection (6) is performed in a transportation pipe connecting the exit of the grinder to the malaxation operation, wherein the gas or gas mixture used for the second injection is made of a neutral gas, for example of nitrogen, or argon, or CO₂, or a mixture of those gases, and contains a certain amount of oxygen, amount located in the 0%-10% O₂ range.

4. The process of claim 3, **characterized in that** the first and second injections implement two different neutral gases or mixtures of neutral gases.

5. The process of claim 3 or 4, **characterized in that** the second injection in said transportation pipe is made using a gas injector having the form of a circular ring provided with gas through-flow holes, allowing the introduction of the gas or gaseous mixture all around the circumference of the pipe inside which flows the olive paste.

6. The process of one of claims 1 to 5, **characterized in that** the first injection is performed using a simple pipe ending up inside the hopper, pipe being in its upstream part connected to a relevant source of gas.

7. The process of one of claims 1 to 5, **characterized in that** the first injection is performed using an injector allowing a gas flow at low speed in laminar flow.

8. The process of one of claims 1 to 5, **characterized in that** the first injection is performed using a simple pipe ending up inside the hopper, pipe being in its upstream part connected to a relevant source of gas

9. An equipment for producing olive oil, comprising :
- a grinder into which is performed an operation of pressing of the olives with the aim of forming an olive paste (9);
- a mixer, able to perform an operation of malaxation of the olive paste;
- a hopper (2), into which are charged the olives and allowing the transfer of the olives from the hopper to the grinder, passing or not through a screw able to transfer the olives from the hopper to the grinder,
**characterized in that** it comprises :
- a first gas injector (5), allowing to perform a first gas injection at the level of the neck of the hopper providing the olives to the grinder;
- and comprising preferentially a second gas injector (6) allowing to perform a second injection in a transportation pipe connecting the exit of the grinder to the mixer.
